Europäisches Patentamt

European Patent Office

Office européen des brevets

(11) Veröffentlichungsnummer: **0 457 125 A1**

# (12) EUROPÄISCHE PATENTANMELDUNG

(21) Anmeldenummer: 91107172.8

(22) Anmeldetag: 03.05.91

(51) Int. Cl.5: **B01D 45/16**

(30) Priorität: 15.05.90 DE 4015511

(43) Veröffentlichungstag der Anmeldung:
21.11.91 Patentblatt 91/47

(84) Benannte Vertragsstaaten:
DE FR GB

(71) Anmelder: MESSER GRIESHEIM GMBH
Hanauer Landstrasse 330
W-6000 Frankfurt/Main 1(DE)

(72) Erfinder: Görlich, Uwe
Hochemmerischer Strasse 151
W-4130 Moers(DE)
Erfinder: Weyermanns, Günther
Degelsheide 24 b
W-4152 Kempen 1(DE)
Erfinder: Zerwas, Stefan
Rieselhof 8
W-4300 Essen(DE)

(54) Abscheider zum Abtrennen von in einer Mühle feingemahlenen Produkten aus einem Gasstrom.

(57) Ein Abscheider zur Abtrennung von in einer Mühle feingemahlenen Produkten aus einem Gasstrom besteht aus einem an den Mühlenaustrog anschließbaren Gehäuse (1) mit einem in das Gehäuse ragenden rohrförmigen zylindrischen Einsatz. Der Gasstrom wird in dieses Rohr eingeleitet und an seiner Außenseite zurückgeführt. Durch die scharfe Umlenkung am Rohraustritt werden die Produkte abgeschieden und aufgefangen. Zwecks Verbesserung der Abscheidewirkung wird der Einsatz aus einem Innenrohr (5) und einem Außenrohr (6) gebildet, die einen der Gasrückführung dienenden Ringraum (7) bilden. Der Ringraum ist durch ein Blech (9) als wendelförmiger Strömungskanal (11) ausgebildet. In Höhe des vom Blech gebildeten Bodens des Strömungskanals befinden sich Schlitze (10) im Außenrohr. Infolge von Zentrifugal- und Trägheitskräften gelangen die noch nicht abgetrennten Partikel durch diese Schlitze in den Raum zwischen Außenrohr und Gehäuse und setzen sich dort ab.

Die Erfindung betrifft einen Abscheider zum Abtrennen von in einer Mühle feingemahlenen Produkten aus einem Gasstrom nach dem Oberbegriff des Anspruches 1.

Bei vielen Mahlvorgängen wird außer dem Mahlgut auch ein Gasstrom durch die Mühle mit durchgesetzt. Der Gasstrom dient zum Fördern oder Kühlen des Mahlgutes. Unabhängig vom Typ der Mühle muß nach der Vermahlung das feingemahlene Produkt durch einen Abscheider vom Gasstrom getrennt werden. Hierzu sind verschiedenartige Vorrichtungen bekannt, beispielsweise Zyklone oder Sichter mit routierenden Einsätzen. Ein einfacher und bewährter Abscheider beruht auf dem Prinzip, den mit feingemahlenem Produkt beladenen Gasstrom in einem Gehäuse aus einem rohrförmigen Einsatz austreten zu lassen und an der Außenseite des rohrförmigen Einsatzes zurückzuführen. Durch die scharfe Umlenkung des Gasstromes beim Austritt aus dem rohrförmigen Einsatz wird das feingemahlene Produkt vom Gasstrom getrennt. Eine solche Vorrichtung zeigt beispielsweise die US-PS 4 579 288.

Es gibt Mahlvorgänge, bei denen nicht nur während des Mahlens eine Kühlung erforderlich ist, sondern auch bei der nachfolgenden Abscheidung des feingemahlenen Produktes und seiner Lagerung eine tiefe Temperatur beibehalten werden muß. Dies trifft beispielsweise zu auf das Mahlen biologischer Substanzen, deren Zellstruktur durch das Mahlen aufgeschlossen wird. Diese normalerweise flüssigen biologischen Substanzen werden zunächst mit Hilfe von flüssigem Stickstoff zu kugelförmigen Pellets gefroren und anschließend bei beispielsweise -70° C vermahlen. Diese tiefe Temperatur muß beibehalten werden, da bereits eine geringe Druckbelastung dazuführt, daß das Produkt antaut. Dies führt zu Brückenbildung und Systemverschlüssen. Das Mahlen und Halten auf dem niedrigen Temperaturniveau erfordert eine große Kühlgasmenge. Aus wirtschaftlichen Gründen wird diese große Gasmenge im Kreis geführt. Dies erfordert eine sorgfältige und nahezu völlige Abtrennung des feingemahlenen Produktes vom Kreisgasstrom.

Hierbei hat sich gezeigt, daß die wegen ihrer Einfachheit an sich bevorzugten Abscheider mit scharfer Umlenkung des Gasstromes beim Austritt aus einem rohrförmigen Einsatz nicht voll befriedigen. Es verbleiben nämlich noch etwa 6 % der feingemahlenen Produkte nach der Umlenkung im Gasstrom. Während dies bei vielen Mahlvorgängen toleriert werden kann, kann es für wertvolle Produkte nicht akzeptiert werden.

Der Erfindung liegt daher die Aufgabe zugrunde, einen Abscheider mit scharfer Umlenkung des mit feingemahlenem Produkt beladenen Gasstromes am Austritt eines rohrförmigen Einsatzes so zu verbessern, daß sich eine nahezu vollständige Produktabtrennung erreichen läßt.

Ausgehend von dem im Oberbegriff des Anspruches 1 berücksichtigten Stand der Technik ist diese Aufgabe erfindungsgemäß gelöst mit den im kennzeichnenen Teil des Anspruches 1 angegebenen Merkmalen.

Vorteilhafte Weiterbildungen der Erfindung sind in den Unteransprüchen angegeben.

Bei dem erfindungsgemäßen Abscheider wird demnach der von Produktteilchen weitgehend befreite Gasstrom nicht einfach an der Außenseite des rohrförmigen Einsatzes zurückgeführt, sondern in einen Ringraum geleitet. Hier wird ihm eine wendelförmige Strömung mittels eines wendelförmigen Strömungskanals aufgeprägt. Bevorzugt besitzen die Wendeln eine zunehmende Steigung. Dem Gasstrom wird somit eine hohe Strömungs- und Rotationsgeschwindigkeit aufgezwungen. Entsprechend groß sind die Zentrifugal- und Trägheitskräfte, welche auf die noch nicht abgetrennten Produktteilchen wirken. Diese Produktteilchen verlassen daher mit Hilfe von sinkender Geschwindigkeit, steigenden statischen Drücken und konstanter Druckdifferenz den Gasstrom durch die entlang der unteren äußeren Wendelkante angebrachten Schlitze. Sie setzen sich im Raum zwischen dem Außenrohr und dem Gehäuse, welcher bevorzugt auch als Ringraum ausgebildet ist, ab. Der vom Produkt weitgehend gereinigte Gasstrom verläßt die Wendel und wird dem Produkteintrag der Mühle erneut zugeführt.

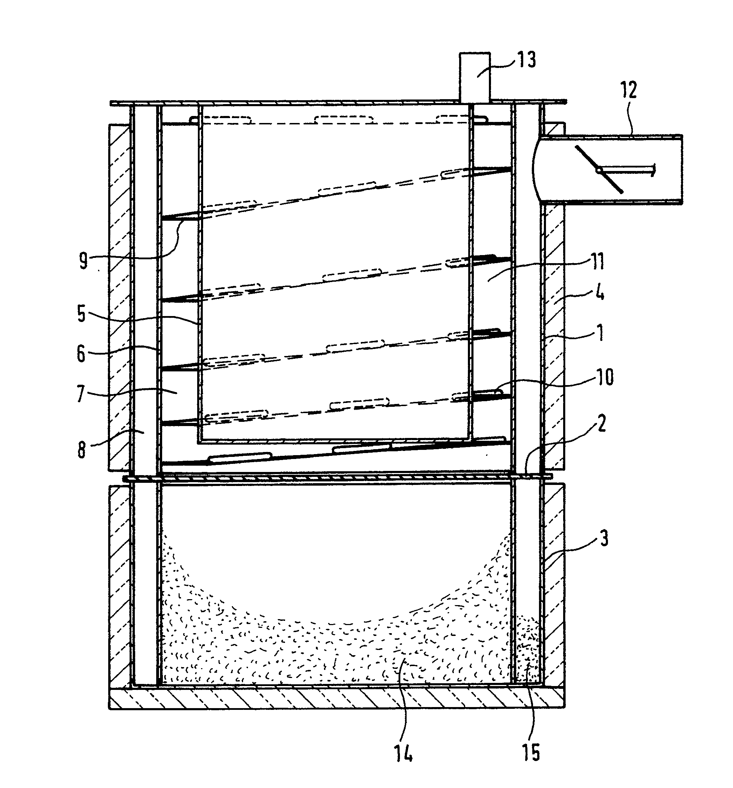

Die Zeichnung veranschaulicht einen unter einem Mühlenaustrag anzubringenden Abscheider gemäß der Erfindung im Längsschnitt.

Der Abscheider besteht aus einem zylindrischen Gehäuse 1, an welches mittels einer Dichtung 2 ein auswechselbarer Topf 3 zum Auffangen des feingemahlenen Produktes angebracht ist. Gehäuse 1 und Topf 3 sind mit einer Isolierung 4 versehen. Im Gehäuse 1 ist ein rohrförmiger zylindrischer Einsatz angeordnet, der im wesentlichen aus einem Innenrohr 5 und einem Außenrohr 6 besteht. Das Innenrohr 5 und das Außenrohr 6 bilden einen Ringraum 7. Desgleichen wird zwischem dem Außenrohr 6 und dem Gehäuse 1 ein Ringraum 8 gebildet. Das Außenrohr 6 reicht bis auf den Boden des Topfes 3 herunter. Der Ringraum 7 ist durch ein Blech 9 zu einem wendelförmigen Strömungskanal 11 ausgebildet. Die Wendeln haben zunehmende Steigung. In Höhe des vom Blech 9 gebildeten Bodens des Strömungskanals 11 befinden sich im Außenrohr 6 Schlitze 10. Im oberen Teil des Gehäuses 1 sind ferner ein Abzugsstutzen 12 und ein Abgasstutzen 13 angeordnet.

Die Wirkungsweise des erfindungsgemäßen Abscheiders wird nachfolgend beschrieben. Der mit feingemahlenem Produkt beladene Gasstrom tritt von oben in das Innenrohr 5 ein, durchströmt es und wird an dessen Austrittsende in den Ringraum 7 umgelenkt. Hierbei scheidet sich der größte Teil der Produktteilchen ab und sammelt sich als Produkt 14 in der Mitte des Topfes 3 an. Der Gasstrom mit den restlichen, nicht abgeschiedenen Produktteilchen strömt nun mit sehr hoher Geschwindigkeit durch den wendelförmigen Strömungskanal 11. Auf die Produktteilchen wirken daher hohe Zentrifugal- und Trägheitskräfte. Wegen der zunehmenden Steigung der Wendel und der entsprechenden Vergrößerung des Strömungsquerschnitts des wendelförmigen Strömungskanals 11 nimmt die Geschwindigkeit des Gasstromes ständig ab. Entsprechend steigt der statische Druck. Dies führt dazu, daß die im Gasstrom noch verbliebenen Produktteilchen durch die Schlitze 10 in den Ringraum 8 gelangen und sich als Restprodukt 15 im äußeren Teil des Topfes 3 absetzen. Durch die Schlitze 10 gelangt auch ein geringer Teil des Gasstromes in den Ringraum 8, welcher durch den Abzugsstutzen 12 über einen Sichtersack abgeführt wird. Die Hauptmenge verläßt jedoch den wendelförmigen Strömungskanal 11 und wird durch den Abgasstutzen 13 dem Produkteintrag der Mühle erneut zugeführt.

Die Wirksamkeit des erfindungsgemäßen Abscheiders zeigen die folgenden Versuchsergebnisse, die mit pelletierter und gefrosteter H-Milch (1,5 % Fett) gewonnen wurden. Die zu mahlenden Pellets wurden hierbei zunächst in einen Wirbelschneckenkühler gegeben und von da in eine Stiftmühle. Es wurden 23,2 kg pelletierte Milch in den Wirbelschneckenkühler aufgegeben. Als Produkt 14 und Restprodukt 15 im Topf 3 wurden 20,5 kg erhalten, davon Restprodukt 15 0,79 kg. Der durch den Abgasstutzen 13 entfernte Gasstrom wurde nun durch einen Zyklon und Sichtersack geleitet. Hierbei wurden noch einmal 0,15 kg feingemahlenes Produkt abgetrennt. Von dem gesamten im Gasstrom noch enthaltenen und nicht abgetrennten Produktteilchen (0,79 kg + 0,15 kg) wurden demnach noch 0,79 kg durch die Schlitze 10 abgetrennt und als Produkt gewonnen. Dies entspricht einem Abscheidegrad von 84 %. Bei der verbleibenden Differenz zwischen insgesamt erhaltenem Produkt (20,5 kg im Topf 3 und 0,15 kg im Sichtersack) und der aufgegebenen Menge von 23,2 kg, nämlich 2,55 kg, handelt es sich um Produktverluste vor allem in der Mühle und im Wirbelschneckenkühler.

**Patentansprüche**

1. Abscheider zum Abtrennen von in einer Mühle feingemahlenen Produkten aus einem Gasstrom, bestehend aus einem an den Mühlenaustrag anschließbaren Gehäuse (1) mit einem der Umlenkung des Gasstromes dienenden rohrförmigen zylindrischen Einsatz, dadurch gekennzeichnet, daß der Einsatz aus einem Innenrohr (5) und einem Außenrohr (6) gebildet wird, die miteinander einen der Gasrückführung dienenden Ringraum (7) bilden, welcher mit einem einen wendelförmigen Strömungskanal (11) formenden Blech (9) versehen ist, wobei der Strömungskanal Schlitze (10) im Außenrohr in Höhe seines vom Blech gebildeten Bodens aufweist.

2. Abscheider nach Anspruch 1, gekennzeichnet durch eine in Strömungsrichtung zunehmende Steigung des wendelförmigen Strömungskanals.

3. Abscheider nach Anspruch 1 oder 2, dadurch gekennzeichnet, daß das Gehäuse ebenfalls zylindrisch ausgebildet ist und mit dem Außenrohr einen zweiten Ringraum (8) bildet.

Europäisches
Patentamt

**EUROPÄISCHER
RECHERCHENBERICHT**

Nummer der Anmeldung

**EP 91 10 7172**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 533 384  (SVEN OLOV MALMSTEN) <br> * Anspruch 1; Figur 1 * <br> – – – | 1 | B 01 D 45/16 |
| A | US-A-2 147 671  (G.L. PRATT) <br> * Anspruch 1; Figur 3 * <br> – – – | 1,2 | |
| A | US-A-4 179 273  (R.R. MONTUSI) <br> – – – – – | 1 | |

| | RECHERCHIERTE SACHGEBIETE (Int. Cl.5) |
|---|---|
| | B 01 D <br> B 07 B |

Der vorliegende Recherchenbericht wurde für alle Patentansprüche erstellt

| Recherchenort | Abschlußdatum der Recherche | Prüfer |
|---|---|---|
| Den Haag | 24 Juni 91 | CUBAS ALCARAZ J.L. |